# EUROPÄISCHE PATENTSCHRIFT

(11) **EP 3 469 304 B1**
(45) Veröffentlichungstag und Bekanntmachung des Hinweises auf die Patenterteilung: **14.04.2021**
(21) Anmeldenummer: 17739864.1
(22) Anmeldetag: 17.05.2017
(51) Int. Cl.: G01C 21/00, G06K 9/00, B61L 27/00, B61L 25/02, B61L 23/04, B61L 15/00, B61L 3/00, B61K 9/08, E01B 35/00, G06F 16/29

(54) **VERFAHREN UND SYSTEM ZUR INSTANDHALTUNG EINES FAHRWEGES FÜR SCHIENENFAHRZEUGE**
METHOD AND SYSTEM FOR THE MAINTENANCE OF A TRAVEL PATH FOR RAIL VEHICLES
PROCÉDÉ ET SYSTÈME D'ENTRETIEN D'UNE VOIE DE COMMUNICATION POUR VÉHICULES FERROVIAIRES

(30) Priorität: 13.06.2016 AT 2872016
(43) Veröffentlichungstag der Anmeldung: 17.04.2019
(73) Patentinhaber: Plasser & Theurer, Export von Bahnbaumaschinen, Gesellschaft m.b.H., 1010 Wien (AT)
(72) Erfinder: BÜRGER, Martin, 4030 Linz (AT); ZAUNER, Gerald, 4073 Wilhering (AT)
(86) Internationale Anmeldenummer: PCT/EP2017/000598
(87) Internationale Veröffentlichungsnummer: WO 2017/215777

(56) Entgegenhaltungen:
- EP-A1- 2 784 540
- EP-A1- 2 937 241
- DE-A1-102014 201 238
- DE-C1- 19 532 104
- US-A- 5 956 664
- US-A1- 2003 222 981

## Beschreibung

### Gebiet der Technik

Die Erfindung betrifft ein Verfahren zur Instandhaltung eines Fahrwegs für Schienenfahrzeuge, wobei zur Feststellung eines Istzustands des Fahrwegs mittels eines auf einem Schienenfahrzeug installierten Messsystems Messdaten erfasst werden und wobei darauf basierend Instandhaltungsmaßnahmen des Fahrwegs durchgeführt werden. Zudem betrifft die Erfindung ein Instandhaltungssystem zur Durchführung des Verfahrens.

### Stand der Technik

Ein Fahrweg für Schienenfahrzeuge umfasst neben Gleisen, Weichen und Kreuzungen auch Oberleitungen und Weichenverbindung sowie sonstige gleisnahe Einrichtungen. Dabei besteht ein Gleis aus auf Schwellen befestigten Schienen und ist in der Regel in einer Schotterbettung gelagert.

Durch Nutzung und Witterungseinflüsse ist ein solcher Fahrweg einem laufenden Verschleiß unterworfen, wodurch regelmäßige Instandhaltungsarbeiten notwendig sind. Basis dafür bilden Ist-Daten des Fahrweges, die mittels diverser bekannter Messverfahren und Messeinrichtungen ermittelt werden.

Beispielsweise kennt man aus der US 4,986,189 A einen an einer Gleisbearbeitungsmaschine montierten Messbalken, der mehrere Sensoren umfasst, wobei die damit erfassten Messdaten gemeinsam ausgewertet werden. Eine weitreichende Messdatenerfassung für Instandhaltungsmaßnahmen ist auch aus der DE 198 01 311 A1 bekannt. Dabei ist die Abspeicherung von Bilddaten oder numerischen Daten bezüglich einer Streckenposition vorgesehen.

Die DE 10 2011 017 134 A offenbart eine Anordnung zur Markierung und Vermessung von Gleisabschnitten zum Zweck der Instandhaltung. Mittels einer Sensoreinheit werden neben einer Schiene befindliche Messpunkte kontaktlos erfasst, um verschleißanfällige Gleisabschnitte positionsgenau zu bestimmen.

Die EP 2 937 241 A1 befasst sich mit dem Erkennen von Schäden an einem Schienenfahrzeug. Dabei erfolgt mittels eines Messsystems eine Erfassung von Messdaten eines Fahrwegs. Mit einer Diagnoseeinheit wird aus den Messdaten ein momentaner Zustand bekannter Objekte des Fahrwegs abgeleitet und in einer Datenbank abgespeichert.

Aus der US 5,956,664 A ist ein Verfahren zur Erfassung von Gleisschäden bekannt. Dazu ist an einem Schienenfahrzeug ein Messsystem angeordnet, das ein ungewöhnliches Fahrverhalten erfasst, um daraus auf Veränderungen des Gleises zu schließen. Konkret wird ein erfasster Ist-Zustand des Gleises mit historischen Statusdaten verglichen. In weiterer Folge werden mittels einer Software Arbeitsaufträge zum Reparieren der erfassten Schäden generiert.

### Zusammenfassung der Erfindung

Der Erfindung liegt die Aufgabe zugrunde, für ein Verfahren und ein Instandhaltungssystem der eingangs genannten Art eine Verbesserung gegenüber dem Stand der Technik anzugeben. Insbesondere soll eine effizientere Planung und Durchführung von Instandhaltungsmaßnahmen erreicht werden.

Erfindungsgemäß wird diese Aufgabe gelöst durch ein Verfahren gemäß Anspruch 1 und ein Instandhaltungssystem gemäß Anspruch 9. Abhängige Ansprüche geben vorteilhafte Ausgestaltungen der Erfindung an.

Dabei werden für Objekte des Fahrwegs Objektklassen vorgegeben, wobei jede Objektklasse durch eine eindeutige Objektklassenkennung definiert ist, wobei mittels einer Auswerteeinrichtung anhand für ein jeweiliges Objekt charakteristischer Messdaten mittels einer Analysesoftware Schotter, Schienen bzw. Schienenabschnitte, Schwellen, Befestigungsmittel, Masten, Fahrdrähte bzw. Fahrdrahtabschnitte und Hindernisse für Arbeitsaggregate einer schienengebundenen Bau- und/oder Instandhaltungsmaschine als Objekte des Fahrwegs erkannt werden, wobei ein erkanntes Objekt der entsprechenden Objektklasse zugeordnet wird, wobei für ein zugeordnetes Objekt eine Objektklassenkennung verknüpft mit Positionsdaten in einer Datenbank als Objektdaten abgespeichert werden und wobei die Instandhaltungsmaßnahmen mittels der schienengebundenen Bau- und/oder Instandhaltungsmaschine durchgeführt werden, indem Steuerungsdaten für einen Arbeitsablauf der schienengebundenen Bau- und/oder Instandhaltungsmaschine aus den in der Datenbank abgespeicherten Daten abgeleitet werden.

Mittels bekannter Messverfahren erfasste Messdaten werden auf neue Art und Weise ausgewertet indem einzelne Objekte des Fahrweges identifiziert und vorgegebenen Objektklassen zugeordnet werden. Objekte wie Schienenabschnitte, Schwellen, Weichen, Masten etc. werden anhand ihrer charakteristischen Messdaten erkannt. Die Abspeicherung erfolgt in Form einer Zuordnung zu der entsprechenden Objektklasse, wobei eine Verknüpfung mit relativen und/oder absoluten Positionsdaten erfolgt.

Der Istzustand des Fahrwegs ist damit in einer objektbasierten Weise abgespeichert, wobei ein Vergleich mit einem Sollzustand oder mit historischen Istzuständen für die Planung und Durchführung von Instandhaltungsmaßnahmen herangezogen wird.

Eine vorteilhafte Objektermittlung mittels Auswerteeinrichtung sieht vor, dass die Messdaten mit vorgegebenen Objektparametern abgeglichen werden. Objektparameter können beispielsweise Abmessungsbereiche von definierten geometrischen Formen oder detektierbare Materialeigenschaften sein. Auch die Zuordnung zur jeweiligen Objektklasse erfolgt dann anhand dieser Objektparameter.

Dabei ist es günstig, wenn für das jeweilige Objekt in der Datenbank eine eindeutige Objektkennung abgespeichert wird. Ein zu behebender Schaden ist damit besonders einfach zuordenbar, indem ein schadhaftes Objekt (z.B. Schienenabschnitt mit Oberflächenfehler, Schwelle mit Lagefehler etc.) anhand der Objektkennung in der Datenbank entsprechend markiert wird.

Für eine genaue Verarbeitung von verknüpften Positionsdaten ist es von Vorteil, wenn aus den Messdaten ortsbezogene Synchronisationsdaten abgeleitet werden und wenn für das jeweilige Objekt in der Datenbank zugeordnete Synchronisationsdaten abgespeichert werden.

Anhand der Synchronisationsdaten (z.B. Spurweite, Schwellen-Chargennummer etc.) sind die einzelnen Objekte mittels einer gleisgebundenen Instandhaltungsmaschine nahezu punktgenau auffindbar. Dazu muss die Instandhaltungsmaschine lediglich mit den Sensoren ausgestattet sein, die während einer vorangegangenen Feststellung des Fahrwegistzustandes zum Einsatz kamen.

Eine Weiterbildung der Erfindung sieht vor, dass aus den Messdaten und aus Merkmalsdaten des Messsystems mittels der Analysesoftware zusätzlich ein mehrdimensionales Modell des Fahrwegs errechnet wird. Ein solches digitales mehrdimensionales Modell wird entweder in der Datenbank abgespeichert oder einer separaten Datenverwaltung zugeführt. Es erlaubt eine besonders effiziente Planung und Durchführung von Instandhaltungsmaßnahmen (z.B. virtuelle Streckenbegehung, Berechnung von Materialmengen etc.).

Dabei ist es vorteilhafte, wenn das mehrdimensionale Modell mit Daten eines virtuellen Lichtraums ergänzt wird, um festzustellen, ob durch Ist-Lagedaten eines Objekts eine Lichtraumverletzung vorliegt. Auf diese Weise kann mittels eines Computersystems berechnet werden, ob Ist-Lagedaten eines jeweiligen Objekts eine Begrenzung des Lichtraums überschreiten. Jede Verletzung des lichten Raums ist damit eindeutig vermessen und identifiziert. Bei Bedarf sind auch andere erfasste Merkmale des Fahrwegs wie Schwellenprägungen, Schienenwalzzeichen, Schienenabstände, Abstände zu Nachbargleisen, Fahrdrahtpositionen, Schienenfehler etc. im mehrdimensionalen Modell ergänzt und somit eindeutig vermessen und identifiziert.

Eine weitere sinnvolle Erweiterung sieht vor, dass das mehrdimensionale Modell mit georeferenzierten Informationsdaten einer separaten Datenquelle ergänzt wird. Damit lässt sich das mehrdimensionale Modell auf einfache Weise mit geodätischen Daten und Satellitenbildern anreichern.

Erfindungsgemäß werden Steuerungsdaten für einen Arbeitsablaufs der schienengebundenen Bau- und/oder Instandhaltungsmaschine aus den in der Datenbank abgespeicherten Daten abgeleitet. Somit werden bereits im Voraus für ein Instandhaltungsaggregat (z.B. Stopfaggregat oder Hebe-RichtAggregat einer Gleisstopfmaschine) alle erforderlichen Vorgaben bereitgestellt. Die Bau- und/oder Instandhaltungsmaschine ist damit für einen automatisierten Betrieb einsetzbar. Günstigerweise werden Korrekturdaten des Fahrwegs anhand der in der Datenbank gespeicherten Daten von einer zentralen Stelle (Off Track) vorgegeben. In der Bau- und/oder Instandhaltungsmaschine werden daraus (On Track) jeweilige Aktions- und Parameterdaten für die einzelnen Aggregate errechnet.

Dabei ist es von Vorteil, wenn ein Sollzustand des Fahrwegs vorgegeben wird, wenn Abweichungen des Istzustands vom Sollzustand ausgewertet werden und wenn die Steuerungsdaten in Abhängigkeit von den ausgewerteten Abweichungen vorgegeben werden. Eine Vorbereitung für den automatisierten Betrieb der Bau- und/oder Instandhaltungsmaschine umfasst dann die Vorgabe von Korrekturdaten, um Objekte des Fahrwegs aus einem fehlerhaften Istzustand in den gewünschten Sollzustand überzuführen.

Eine zusätzliche Verbesserung des Instandhaltungsverfahrens sieht vor, dass nach einem Arbeitsablauf der Bau- und/oder Instandhaltungsmaschine der Istzustand des Fahrweges festgestellt wird. Damit lässt sich unmittelbar nach Durchführung einer Instandhaltungsmaßnahme die erzielte Qualität feststellen und dokumentieren. Günstig ist zudem eine Protokollierung der kompletten Maschinenzustände während eines Wartungsvorgangs. Diese Daten können in weiterer Folge ausgewertet werden, um deren Relevanz in Bezug auf die Qualität festzustellen bzw. um Zusammenhänge zwischen Aggregataktionen bzw. -parametern und Ergebnissen herzustellen.

Ein erfindungsgemäßes Instandhaltungssystem zur Durchführung eines der vorgenannten Verfahren umfasst ein auf einem Schienenfahrzeug installiertes Messsystem zur Messdatenerfassung. Dabei ist die Auswerteeinrichtung zur Erkennung von Schotter, Schienen bzw. Schienenabschnitten, Schwellen, Befestigungsmitteln, Masten, Fahrdrähten bzw. Fahrdrahtabschnitten und Hindernissen für Arbeitsaggregate einer schienengebundenen Bau- und/oder Instandhaltungsmaschine als Objekten des Fahrwegs aus den Messdaten und zur Zuordnung des jeweiligen Objekts zu einer Objektklasse eingerichtet, wobei ein Datenübertragungssystem zur Übertragung der einem Objekt zugeordneten Objektdaten an die Datenbank eingerichtet ist und wobei die schienengebundene Bau- und/oder Instandhaltungsmaschine zur Durchführung von Instandhaltungsmaßnahmen auf Basis der Objektdaten ausgebildet ist, indem die Bau- und/oder Instandhaltungsmaschine eingerichtet ist zur Verarbeitung von Steuerungsdaten, die aus in der Datenbank gespeicherten Daten abgeleitet sind. Die Auswerteeinrichtung ist günstigerweise als Computer ausgebildet, mit Zugriff auf die in einem Server eingerichtete Datenbank oder mit integrierter Datenbank. Im letzteren Fall umfasst der Computer ein als Bussystem ausgebildetes Datenübertragungssystem.

In einer Weiterbildung ist vorgesehen, dass die Auswerteeinrichtung zur Errechnung eines mehrdimensionalen Modells des Fahrwegs aus den Messdaten und aus Merkmalsdaten des Messsystems eingerichtet ist. Dazu werden aus den Messdaten ableitbare Koordinaten der Fahrwegoberfläche in ein vorgegebenes dreidimensionales Bezugssystem transformiert. Zu den räumlichen Dimensionen können weitere wie die Zeit, Temperatur oder einzelne Materialeigenschaften hinzukommen.

Für eine effiziente Bedienung des Instandhaltungssystems ist es von Vorteil, wenn das Instandhaltungssystem ein Ausgabegerät zur perspektivischen Darstellung des mehrdimensionalen Modells umfasst. Derartige Ausgabegeräte ermöglichen beispielsweise eine virtuelle Streckenbegehung und eine intuitive Festlegung von Korrekturdaten. Einzelne Objektklassen, Materialeigenschaften oder erkannte Fehler können dabei farblich gekennzeichnet sein.

Zur Generierung detaillierter Objektdaten ist vorgesehen, dass das Messsystem einen Laser-Rotationsscanner, einen Laser-Linienscanner, einen Wirbelstromscanner, eine Inertialmesseinheit, eine Kamera und einen GNSS-Empfänger umfasst. Durch Datenfusion der mittels dieser Sensoren erfassten Messdaten ist ein Modell des Fahrwegs mit hoher Informationsdichte erstellbar.

Eine weiteres Merkmal der Erfindung betrifft eine Weiterverarbeitung der in der Datenbank gespeicherten Daten, indem die Bau- und/oder Instandhaltungsmaschine eingerichtet ist zur Verarbeitung von Steuerungsdaten, die aus in der Datenbank gespeicherten Daten abgeleitet sind.

### Kurze Beschreibung der Zeichnungen

Die Erfindung wird nachfolgend in beispielhafter Weise unter Bezugnahme auf die beigefügten Figuren erläutert. Es zeigen in schematischer Darstellung:
Fig. 1 Teilkomponenten des Instandhaltungssystems
Fig. 2 Ablauf des Instandhaltungsverfahrens
Fig. 3 Datenverarbeitung des Messsystem
Fig. 4 Analyse der Messdaten
Fig. 5 Struktur einer Analysesoftware
Fig. 6 Struktur einer Maschinensteuerungssoftware
Fig. 7 Struktur einer Gleisbausoftware
Fig. 8 Arbeitsablauf einer Bau- und/oder Instandhaltungsmaschine

### Beschreibung der Ausführungsformen

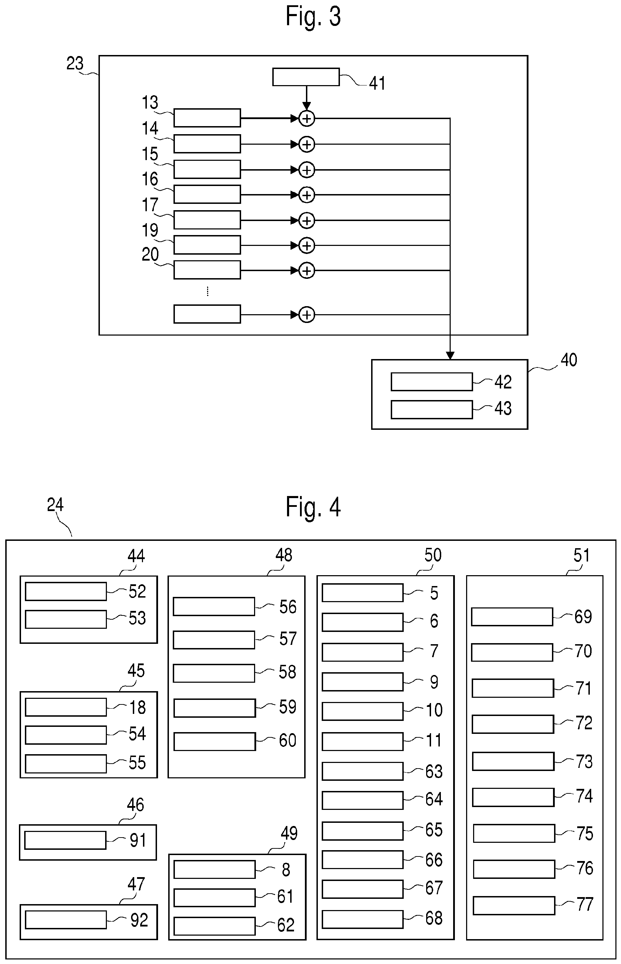

Das Instandhaltungssystem 1 in Fig. 1 umfasst ein Messsystem 2 zur Vermessung des Fahrwegs 3. Günstigerweise ist dieses Messsystem 2 auf einer schienengebundenen Bau- und/oder Instandhaltungsmaschine 4 angeordnet. Alternativ dazu kann das Messsystem 2 auch an einer anderen Trägerplattform angebracht sein, beispielsweise an einem Messwagen.

Der Fahrweg 3 umfasst verschiedene Objekte wie Schotter 5, Schienen bzw. Schienenabschnitte 6, Schwellen 7, Befestigungsmittel 8, Masten 9, Fahrdrähte bzw. Fahrdrahtabschnitte 10 und als Hindernisse 11 für Arbeitsaggregate 12 zu beachtende Einrichtungen. Des Weiteren sind nicht dargestellte Objekte wie Bahnsteige, Weichenelemente, Vegetation, Lärmschutzwände, Geländer, Verkehrszeichen, Signalanlagen, Stellmechanismen oder Zwangsbauten wie Brücken oder Bahnübergänge dem Fahrweg 3 bzw. dem erweiterten Fahrweg 3 zuzurechnen.

Das Messsystem 2 umfasst mehrere Sensoren, die an verschiedenen Positionen angebracht sein können. An der Stirnseite der Bau- und/oder Instandhaltungsmaschine 4 ist beispielsweise ein Laser-Rotationsscanner 13 angeordnet. Der Laser-Rotationsscanner 13 liefert zweidimensionale Abbildungen des Fahrwegs 3 an der aktuellen Position. Diese Abbildungsdaten werden gemeinsam mit mittels GNSS oder Odometer gewonnener Positionsdaten verarbeitet. Mehrere zweidimensionale Abbildungen hintereinander ergeben eine dreidimensionale Punktwolke. Diese Punktwolke wird gefiltert und weiterverarbeitet, um Ausreißer und fehlerhafte Messpunkte zu entfernen und eine bessere optische Darstellbarkeit zu erreichen.

Zumindest über jeder Schiene 6 ist ein Laser-Linienscanner 14 angeordnet, um die exakte Form der jeweiligen Schienenoberfläche zu erfassen. Damit werden auch weitere Merkmale wie Walzzeichen, Schwellenprägungen, Befestigungsmittel etc. erfasst. Zudem sind mehrere Wirbelstromscanner 15 angeordnet, um die Lage metallischer Objekte wie Befestigungsmittel 8 zu erfassen.

Mittels einer Inertialmesseinheit 16 werden Lageänderungen während einer Vorwärtsbewegung detektiert und auf diese Weise die exakte relative Gleislage erfasst. Ein absoluter Bezug wird mittels eines GNSS-Empfängers 17 hergestellt. Genauer wird diese Methode durch die Einbeziehung von GNSS-Referenzstationen, die beispielsweis an fixen Bauwerken wie Brücken angeordnet sind.

Eine noch genauere absolute Lagebestimmung erfolgt mittels im Fahrweg 3 angeordneter Mastbolzen 18, deren Lagen im Bezug zum Gleis beispielsweise mittels einer Stereokamera 19 erfasst werden. Ein diesbezügliches Verfahren ist in der von derselben Anmelderin eingereichten österreichischen Patentanmeldung A199/2016 offenbart.

Zusätzlich ist zumindest eine Kamera 20 vorgesehen, um Farbdaten zu erfassen, die im Zuge der Datenverarbeitung den einzelnen Punkten der mittels Laser-Rotationsscanner 13 erfassten Punktwolke zugeordnet werden. Dabei handelt es sich günstigerweise um eine hochauflösende Kamera, damit jedem Punkt der Punktwolke ein eigenes Farbpixel zuordenbar ist. Mit mehreren Kameras 20 können entsprechend mehr Farbinformationen gesammelt und der Punktwolke zugeordnet werden.

Die mittels der einzelnen Sensoren bzw. Empfangseinrichtungen 13, 14, 15, 16, 17, 19, 20 erfassten Messdaten 40 werden einer gemeinsamen Auswerteeinrichtung 21 zugeführt. Die mittels Auswerteeinrichtung 21 verarbeiteten Daten werden einer Steuerungseinrichtung 22 der Bau- und/oder Instandhaltungsmaschine 4 zugeführt.

Wie in Fig. 2 dargestellt steht am Beginn des Instandhaltungsverfahrens die Vermessung 23 des Fahrwegs 3. In der Auswerteeinrichtung 21 erfolgt ein Analyseschritt 24. Dabei werden aus den Messdaten 40 Objekte 5, 6, 7, 8, 9, 10, 11 des Fahrwegs 3 ermittelt. In weiterer Folgen werden ermittelte Objekte 5, 6, 7, 8, 9, 10, 11 jeweils einer Objektklasse zugeordnet und mit Positionsdaten verknüpft, wobei jede Objektklasse durch eine eindeutige Objektklassenkennung definiert ist. Zudem wird aus den Messdaten 40 und aus Merkmalsdaten 80, 81 des Messsystems 2 ein mehrdimensionales Modell 79 des Fahrwegs 3 errechnet.

Die verknüpften Objektdaten 25 werden an eine Datenbank 26 übermittelt. Dort geschieht die Datenverwaltung und Datensicherung 27. Die Daten des mehrdimensionalen Modells 79 werden ebenfalls an die Datenbank 26 übermittelt und dort verwaltet oder einer separaten Datenverwaltung zugeführt. Im letzteren Fall ist eine übergeordnete Datenverwaltung unter Einbeziehung aller Daten sinnvoll.

Günstigerweise ist die Datenverwaltung in einem zentralen Server bzw. Servernetzwerk eingerichtet, mit einer abgesicherten Anbindung an das Internet. Auf diese Weise besteht die Möglichkeit, abgespeicherte Mess- und Analysedaten 101, 105 weltweit abrufen zu können. Die gesammelten Daten bilden die Basis für eine Gleisarbeitsplanung 28, die mittels eines Computers 29 erfolgt. Dazu greift der Computer 29 auf die Datenbank 26 bzw. eine übergeordnete Datenverwaltungsebene zu und ruft die für die jeweilige Planung erforderlichen streckenbezogenen Objekt- und Modelldaten 30 ab.

Anhand eines automatisierten Abgleichs mit vorgegebenen Soll-Zustandsdaten der ausgewählten Strecke ergeben sich Arbeitsauftragsdaten 31. Diese werden an die Bau- und/oder Instandhaltungsmaschine 4 übermittelt und stehen als Vorgabe für den Steuerungsvorgang 32 der Maschine 4 zur Verfügung.

Zur Dokumentation der Arbeitsergebnisse erfolgt in einem nächsten Verfahrensschritt eine Nachmessung und Protokollierung 33. Dabei werden wiederum mittels des Messsystems 2 Messdaten 40 erfasst und zu aktualisierten Zustandsdaten 34 des Fahrwegs 3 weiterverarbeitet. Auch diese Daten werden in der Datenbank 26 abgespeichert.

Zudem erfolgt eine Überführung der Messdaten 40 in einen Elektronischen Messschreiber (Data Recording Prozessor, DRP) zur Generierung von Abnahmeprotollen.

Zur Übertragung der Daten 25, 30, 31, 34 umfasst das Instandhaltungssystem 1 ein Datenübertragungssystem 35, das beispielsweise als ein abgesichertes Funknetz ausgebildet ist. An der Bau- und/oder Instandhaltungsmaschine 4 ist eine entsprechende Antenne 36 angeordnet. Im einfachsten Fall werden die zu übertragenen Daten gesammelt an ein zentrales Datenverwaltungssystem überführt. Das Datenübertragungssystem 35 umfasst dann austauschbare Speichermedien und entsprechende Schreib- bzw. Lesegeräte.

Das Datenübertragungssystem 35 ist mit einem Computernetzwerk 37 verbunden, das einen Datenbankserver mit implementierter Datenbank 26 umfasst. Damit erfolgt eine zentrale Verwaltung der Daten, wobei der Computer 29 zur Durchführung der Gleisarbeitsplanung 28 auf die Datenbank 26 bzw. die übergeordnete Datenverwaltungsebene zugreift. Die mittels Computer 29 generierten Arbeitsauftragsdaten 31 werden ebenfalls über das Computernetzwerk 37 und das Datenübertragungssystem 35 an die Bau- und/oder Instandhaltungsmaschine 4 übermittelt.

Der Computer 29 und die Auswerteeinrichtung 21 sind Elemente eines abgesicherten Computersystems 38 und sind mit dem Computernetzwerk 37 verbunden. Es können auch mehrere Computer 29 vorgesehen sein, die jeweils auf die Datenbank 26 bzw. die übergeordnete Datenverwaltungsebene zugreifen und zur Gleisarbeitsplanung 28 eingerichtet sind. Bei Bedarf besteht über das Computernetzwerk 37 auch Zugriff auf externe Datenquellen 39.

Wenn die Bau- und/oder Instandhaltungsmaschine 4 exklusiv für ein Inselstreckennetz vorgesehen ist, kann es sinnvoll sein, alle Komponenten des Instandhaltungssystems in der Bau- und/oder Instandhaltungsmaschine 4 zu integrieren. Das Datenübertragungssystem 35 ist dann als drahtgebundenes Netz innerhalb der Maschine 4 ausgebildet. In dieser Erfindungsausprägung sind die Auswerteeinrichtung 21 und die Datenbank 26 in einem leistungsstarken On-Board-Computer integrierbar.

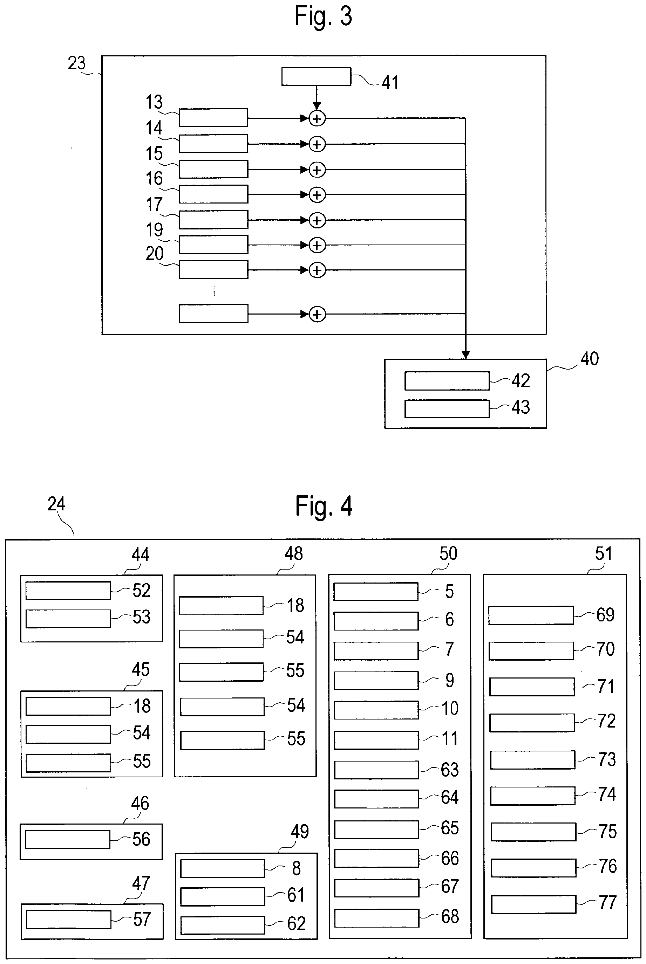

Die Funktionsweise des Messsystems 2 wird anhand der Fig. 3 erläutert. Es handelt sich dabei um ein vollautomatisches, computergestütztes Messsystem 2, welches Maße und Parameter für die Gleisarbeitsplanung 28 in erforderlicher Genauigkeit und Qualität erfasst.

Die Vermessung 23 ergibt synchronisierte Messdaten 40 des Fahrwegs 3. Konkret liefern die einzelnen Sensoren bzw. Empfangseinrichtungen 13, 14, 15, 16, 17, 19, 20 jeweilige Daten, die mittels eines jeweiligen Synchronisationsmerkmals 41 aufeinander abgestimmt werden. Diese Messdaten 40 sind somit Rohdaten 42 bzw. Ergebnisse 43 einer Sensorinternen Auswertung.

In weiterer Folge wird aus diesen Messdaten 40 durch Datenfusion ein computergestütztes Modell 79 des Fahrwegs 3 errechnet. In einer einfachen Ausprägung bildet das Modell 79 die geometrischen Gegebenheiten des Fahrwegs 3 ab, weil diese stark variieren und deshalb ein Bedienpersonal einer Bau- und/oder Instandhaltungsmaschine 4 besonders fordern. Auf Basis des geometrischen Modells 79 wird ein weitgehend automatisierter Arbeitsablauf ermöglicht.

Für die Instandhaltungsplanung sind auch weitere Zustandsdaten des Fahrwegs 3 von Nutzen. So können beispielsweise mit weiteren Sensoren wie Georadar, Temperatursensoren, Feuchtigkeitssensoren etc. auch nichtgeometrische Aspekte des Fahrwegs 3 erfasst und in das Modell 79 integriert werden.

Die Art der verwendeten Sensoren bzw. Empfangseinrichtungen 13, 14, 15, 16, 17, 19, 20 werden dem jeweiligen Bedarfsfall angepasst und an die für den Arbeitsprozess notwendigen Bedingungen adaptiert. Bei Verfügbarkeit von neuartigen Sensoren können diese auf einfache Art und Weise in die Gruppe der unterstützten Sensoren aufgenommen werden. Damit können die hinzugekommenen Messdaten 40 in das Modell 79 integriert werden und stehen für weitere Arbeitsprozesse zur Verfügung.

Mittels des Instandhaltungssystems 1 durchführbare Arbeitsprozesse sind beispielsweise Gleisrichten, Gleisstopfen, Gleislagenmessung, Qualitätssicherung, Fahrdrahtverlaufsmessung, Fahrdrahtabnützungsmessung, Schienenprofilmessung, Erfassung fehlender Befestigungen, Schotterprofilmessung, Abnahmekontrollen, Erstellung von Abnahmeberichten, Erfassung der Gleisgüte, Erfassung von Schäden, Inventur, Erfassung von Lichtraumüberschreitungen etc..

Mit den einzelnen Sensoren bzw. Empfangseinrichtungen 13, 14, 15, 16, 17, 19, 20 werden konkret folgende Istzustände des Fahrwegs 3 ausgewertet: Der GNSS-Empfänger 17, die Inertialmesseinheit 16 und die Stereokamera 19 dienen zur Erfassung der geodätischen Gleislage. Eine redundante Ausführung dieser Komponenten können die Verfügbarkeit und die Genauigkeit der gemessenen Koordinaten erhöhen.

Der Laser-Rotationsscanner 13 dient zur Erfassung der Schienen bzw. Schienenabschnitte 6, der Schwellen 7, des Fahrdrahts bzw. der Fahrdrahtabschnitte 10, der Masten 9 sowie von Tunnelwänden, Gebäuden, Vegetation, Beschilderungen, Aufhängern, Aufschriften und aller sonstigen im Erfassungsbereich des Scanners 13 gelegenen Objekte.

Bei der Fahrdrahtverlaufsmessung wird der Fahrdraht 10 innerhalb eines relevanten Bereichs erkannt und gespeichert. Konkret wird der relative Abstand zur Gleisachse ermittelt. Dabei wird die Gleisachse anhand der erfassten Schienen 6 errechnet.

Die über dem Gleis angeordneten Laser-Linienscanner 14 dienen zur Erfassung von Details des schienennahen Bereichs sowie der Spurachse, der Gleisachse, des Schienenprofils etc.. Da dieser Sensortyp Daten mit hoher Qualität liefert, werden Laser-Linienscanner 14 auch zur genauen Erfassung von Stoßlaschen, Schwellenbefestigungen, Radlenkern, Fahrdrähten und beliebigen anderen Objekten eingesetzt.

In der Auswerteeinrichtung 21 werden die mittels des Messsystems 2 erfassten Messdaten 40 automatisch analysiert, wie anhand der Fig. 4 näher erläutert wird. Konkret läuft in der Auswerteeinrichtung 21 eine Software ab, die in mehrere Analyseblöcke 44, 45, 46, 47, 48, 49, 50, 51 unterteilt ist. Die Abarbeitung erfolgt je nach Aufbau und Leistungsfähigkeit der Hardware- und Softwarekomponenten sequenziell oder parallel.

In einem ersten Analyseblock 44 erfolgt eine Bildanalyse mittels einer Mustererkennungssoftware und einer OCR-Software, wobei Hektometer-Tafeln 52 und Signaltafeln 53 als Objekte erfasst werden. Ausgewertet werden dabei in einer Speichereinheit der Auswerteeinrichtung 21 zwischengespeicherte Bilddaten der nach vorne gerichteten Kamera 20.

Ein zweiter Analyseblock 45 arbeitet ebenfalls mit einer Mustererkennungssoftware sowie einer Auswertesoftware zur Bestimmung von Paralaxen in Doppelbildern, die mittels der Stereokamera 19 aufgenommen werden. Damit werden an Masten 9 angebrachte Mastbolzen 18 und sonstige Fixpunkte 54 sowie Geo-Koordinaten 55 erkannt.

Ein dritter Analyseblock 46 arbeitet mit einer Auswertungssoftware für empfangene GNSS-Daten und liefert geodätische Lagekoordinaten 92, bezogen auf die Position des GNSS-Empfängers 17. Mittels rechnergestützter Koordinatentransformation werden diese Lagekoordinaten 56 auf ein vorgegebenes Bezugskoordinatensystem transformiert.

Ein vierter Analyseblock 47 wertet die mittels eines Odometers erfassten Messdaten 40 aus, woraus sich momentane Positionsdaten 91 eines vorgegebenen Maschinenreferenzpunktes ergeben. Auch hier erfolgt eine Koordinatentransformation auf das Bezugskoordinatensystem.

In einem fünften Analyseblock 48 erfolgt die Auswertung der Inertialmesseinheit 16. Diese erfasst relative Bahnkoordinaten eines Referenzpunktes während einer Vorwärtsfahrt, wobei über Distanzmesseinrichtungen (z.B. Lasersensoren) laufend die Distanzen dieses Referenzpunktes zu den beiden Schienen 6 gemessen werden. Üblicherweise wird dabei als schienenbezogene Messlinie eine Schnittgerade zwischen der jeweiligen Schieneninnenseite und eine gedachten waagrechten Ebene 14mm unterhalb der jeweiligen Schienenoberkante herangezogen. Die Auswertung mittels des fünften Analyseblocks 48 ergibt somit Daten für den Gleisverlauf 56, sowie eine Gleisüberhöhung 57, eine Richtung 58, Längshöhen 59 und Pfeilhöhen 60.

Ein sechster Analyseblock 49 wertet die Daten des jeweiligen Wirbelstromscanners 15 aus und liefert Positionsdaten zu metallischen Elementen wie Befestigungsmittel 8 (Schwellenbefestigung), Kabel 61 oder Weichengestänge 62.

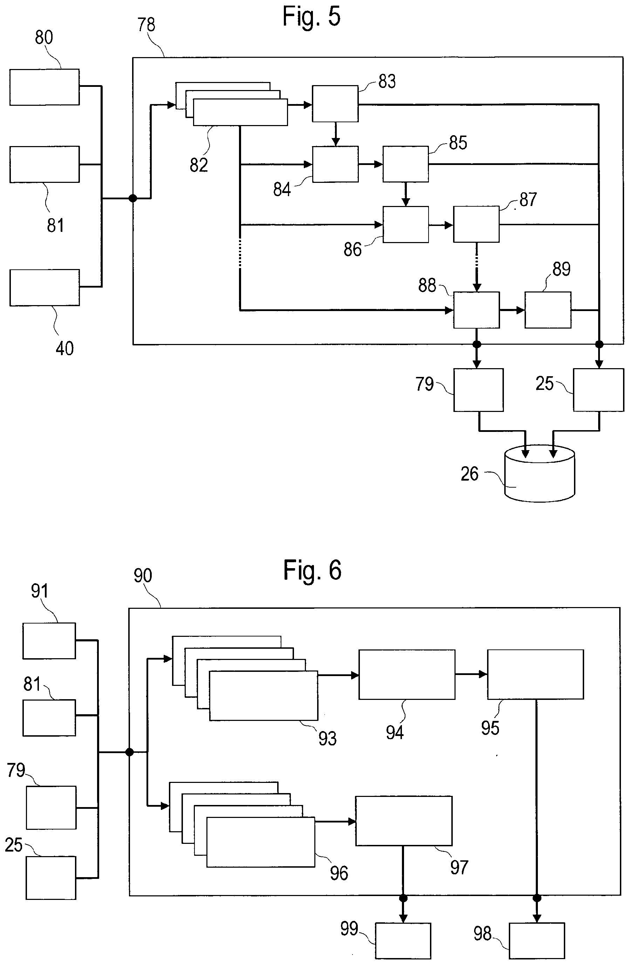

Ein siebenter Analyseblock 50 nutzt eine 3D-Datenanalyse. Dabei wird aus den Messdaten 40 ein mehrdimensionales Modell 79 des Fahrwegs 3 errechnet. Dies geschieht mittels einer Software zur Sensordatenfusion, wie in Fig. 5 dargestellt. Resultat der Datenanalyse sind zudem erkannte Objekte, die vorgegebenen Objektklassen zuordenbar sind.

Neben den erkannten Objekten wie Schienen 6, Schotter 5, Hindernisse 11, Fahrdraht 10, Bahnsteigkante 63, Masten 9, Anbauteile 64, Schwellen 7 oder Zwangslagen 65 (Brücken, Bahnübergänge) werden auch Lichtraumverletzungen 66, der Gleisabstand 67 und das Schotterprofil 68 erkannt.

In einem achten Analyseblock 51 erfolgt eine Bildanalyse mittels einer Mustererkennungssoftware und gegebenenfalls einer OCR-Software, wobei die Messdaten 40 der nach unten gerichteten Laser-Linienscanner 14 ausgewertet werden. Konkret geschieht das mittels 2.5D-Analyse oder 3D-Analyse. Damit erkannt werden eine Spurweite 69, Schienenfehler 70, Schienenwalzzeichen 71, Befestigungsfehler 72, Schwellenzeichen 73, Schienenprofile 74, einzelne Steine 75 auf Schwellen 7, Abnutzung 76 und Stoßlaschen 77.

Mit den angegebenen Analyseblöcken 44, 45, 46, 47, 48, 49, 50, 51 erfolgt somit eine automatische, computergestützte Analyse der erfassten Messdaten 40 mit dem Ziel einer Klassifizierung der für einen jeweiligen Arbeitsprozess relevanten Parameter und Größen. Die Klassifizierung mündet in klar definierten Objekten mit anhaftenden Messwerten und Daten zur Speicherung in der Datenbank 26. In weiterer Folge sind diese Daten in CAD-Modellen und sonstigen betrieblichen-, technischen- und anderen Softwaresystemen nutzbar.

Durch die Übertragung der Daten auf einen zentralen Speicher werden auch Arbeitsprozesse unterstützt, welche nicht direkt am Fahrweg 3 stattfinden (Baustellenplanung, Betriebsmittelbeschaffung, Betriebsmitteltausch, Qualitätssicherung etc.). Auch eine Darstellung in Virtual-Reality-Geräten zur virtuellen Begehung und Präsentation des Fahrwegs 3 ist damit realisierbar.

Des Weiteren wird bei Bedarf eine Klassifizierung nach nichtgeometrischen Kriterien vorgenommen (Temperatur, Dichte von Materialien etc.), um eine diesbezügliche Bewertung vorzunehmen und damit Arbeitsprozesse zu optimieren. Beispielsweise lässt sich bei einem Gleisstopfvorgang eine höhere Qualität der Gleislage erreichen, wenn zuvor die Dichte des Schotterbetts bekannt ist.

Für das automatisierte Gleisstopfen oder das sogenannte dynamische Gleisstabilisieren sind die Voraberkennung von Hindernissen 11 sowie die genaue Vermessung der Schwellen 7 von großer Bedeutung. Die beschriebene Vermessung 23 mit anschließender Analyse 24 liefert vorab alle Daten, um Schäden während eines Gleisstopfvorgangs durch die diversen Arbeitsaggregate 12 zu verhindern. Entweder wird damit ein Warnsystem für das Bedienpersonal oder eine vollautomatische Gleisstopfung realisiert.

Die Struktur der Analysesoftware 78 zur Errechnung des virtuellen mehrdimensionalen Modells 79 sowie von Objektdaten 25 ist in der Fig. 5 dargestellt. Eingangsdaten sind die Messdaten 40 und Merkmalsdaten 80, 81, die Merkmale des Messsystems 2 betreffen. Das können einerseits Merkmalsdaten 80 der Bau- und/oder Instandhaltungsmaschine 4 und andererseits Merkmalsdaten 81 der Sensoren bzw. Empfangseinrichtungen 13, 14, 15, 16, 17, 19, 20 sein.

In einem ersten Schritt werden die Eingangsdaten 40, 80, 81 mittels mehrerer Vorbearbeitungsmodule 82 für die Analyse aufbereitet. Dabei erfolgen beispielsweise Koordinatentransformationen, um alle Daten auf ein gemeinsames Bezugssystem abzustimmen.

Mittels eines ersten Analysemoduls 83 werden aus den aufbereiteten Daten erste Objekte erkannt. Beispielsweise handelt es sich dabei um annähernd punktförmige Objekte wie Befestigungsmittel 8, die durch das Ansprechen des darüber hinwegbewegten Wirbelstromscanners 15 eindeutig klassifizierbar sind. Die entsprechenden Objektdaten 25 werden einerseits ausgegeben und andererseits an ein erstes Datenfusionsmodul 84 übergeben.

Mittels des ersten Datenfusionsmoduls 84 werden die vorverarbeiteten Eingangsdaten 40, 80, 81 mit den Objektdaten 25 der erkannten Objekte verknüpft. Resultat ist eine zweidimensionale Datenbasis für ein zweites Analysemodul 85. Damit werden alle Objekte erkannt, die anhand einer zweidimensionalen Ausdehnung eindeutig einer Referenz-Objektklasse zuordenbar sind. Diese als Analyseergebnisse erhaltenen Objektdaten 25 werden wiederum ausgegeben und an ein zweites Datenfusionsmodul 86 übergeben.

Auch diesem zweiten Datenfusionsmodul 86 sind die vorverarbeiteten Eingangsdaten 40, 80, 81 zugeführt, sodass sich eine dreidimensionale Datenbasis für ein drittes Analysemodul 87 ergibt. Eine Analyse der dreidimensionalen Strukturen liefert weitere erkannte Objekte, deren Objektdaten 25 abgespeichert werden.

Mittels weiterer Datenfusionsmodule 88 können der Datenbasis weitere Dimensionen hinzugefügt werden. Dies können die Erfassungszeit oder bestimmte Materialeigenschaften (z.B. Dichte, Temperatur) betreffen. Mittels weiterer Analysemodule 89 ist die Datenbasis hinsichtlich dieser weiteren Dimensionen auswertbar.

Nach der letzten Datenfusion liegt ein virtuelles n-dimensionales Modell 79 des Fahrwegs 3 vor, wobei n-1 die Anzahl der Datenfusionsvorgänge angibt. Dieses mehrdimensionale Modell 79 wird in der Datenbank 26 oder separat abgespeichert und steht für die Planung und Ausführung von Instandhaltungsmaßnahmen zur Verfügung. Dasselbe gilt für die Objektdaten 25 der einzelnen erkannten Objekte, die in der Datenbank 26 abgespeichert werden.

Ein weiterer vorteilhafter Aspekt der Erfindung betrifft die Steuerung der Bau- und/oder Instandhaltungsmaschine 4. Dieser wird anhand der Fig. 6 erläutert. In der Steuerungseinrichtung 22 ist eine Maschinensteuerungssoftware 90 implementiert. Dieser sind als Eingangsdaten die Objektdaten 25 und das mehrdimensionale Modell 79 bzw. die für einen jeweiligen Arbeitsablauf relevanten Daten dieses Modells 79 zugeführt. Zudem bilden eine momentan erfasste Maschinenposition 91 und relevante Maschinenmerkmale 80 Eingangsdaten der Maschinensteuerungssoftware 90.

Die Erfassung der momentanen Maschinenposition 91 erfolgt günstigerweise mittels des Messsystems 2, das bereits im Vorfeld zur Erfassung des Fahrwegs 3 herangezogen wurde. Als relevante Maschinenmerkmale 80 gelten beispielsweise markante Maschinenabmessungen, insbesondere Abstandsmaße zwischen Elementen des Messsystems 2 und diversen Arbeitsaggregaten 12.

Je nachdem, um welche Bau- und/oder Instandhaltungsmaschine 4 es sich handelt, kommen unterschiedliche Arbeitsaggregate 12 zum Einsatz. Betroffene Maschinentypen sind z.B. eine Umbauzug, eine Kehrmaschine, ein Schotterpflug, ein Messwagen, eine Streckenstopfmaschine oder eine Weichenstopfmaschine.

Bei einer Weichenstopfmaschine sind mehrere Arbeitsaggregate 12 anzusteuern. Ein Hebe- und Richtaggregat umfasst Rollzangen und Haken, die einzeln ansteuerbar sind. Die jeweilige Rollzange wird an einer Schiene 6 entlanggeführt und muss bei Hindernissen 11 geöffnet werden. Bei engen Platzverhältnissen kommt der jeweilige Haken zum Einsatz. Da jedes Hindernis 11 mittels des beschriebenen Analyseverfahrens als Objekt erkannt wird und dessen Lage im Gleis der Steuerungseinrichtung 22 zugeführt wird, ist ein automatisierter Einsatz des Hebe- und Richtaggregats möglich.

Dasselbe gilt für die Stopfaggregate. Jedes Stopfaggregat wird korrekt über dem jeweiligen Schwellenfach oberhalb des Gleises positioniert. An rotierten Schwellen erfolgt eine Drehung der Stopfaggregate. Zudem werden die Anstellwinkel von Stopfpickeln je nach Freiraum im Schwellenfach justiert. Einzelne Stopfpickel sind durch Hochschwenken deaktivierbar.

Anhand des mehrdimensionalen Modells 79 wird im Voraus jeder Parameter (Drehwinkel, Position der Teile, Neigung der Stopfpickel usw.) des jeweiligen Arbeitsaggregats 12 errechnet und einem Bedienpersonal als Arbeitsvorschlag angezeigt. Diese Anzeige erfolgt computergestützt in realitätsnaher Weise. Zum Einsatz kommen können Augmented Reality und Virtual Reality Geräte (z.B. Oculus Rift, Microsoft Hololens, HTC vive etc.), um eine hohe Bedienerfreundlichkeit und Arbeitsplatzergonomie sicherzustellen.

Konkret werden anhand der zugeführten Daten 25, 79, 81, 91 für jedes angesteuerte Arbeitsaggregat 12 mittels eines jeweiligen Aktionsmoduls 93 eine Aggregataktion berechnet. Resultate dieser Berechnungen sind beispielsweise ein Schienenhebewert für ein Hebe- und Richtaggregat und Positionswerte für ein Stopfaggregat.

Diese Aktionsdaten werden einem Abstimmungsmodul 94 zugeführt, um die einzelnen Aggregatsaktionen aufeinander abzustimmen und Steueraufträge zu generieren. Diese Steueraufträge werden in einem nachfolgenden Übergabemodul 95 für eine speicherprogrammierbare Steuerung (SPS) der Bau- und/oder Instandhaltungsmaschine 4 aufbereitet und an diese übergeben.

Parallel dazu werden für die einzelnen Arbeitsaggregate 12 mittels Parametermodule 96 verschiedene Einstellparameter berechnet, zum Beispiel die Beistelldauer eines Stopfaggregats. In einem nachfolgenden Übergabemodul 97 erfolgt eine Parameterdatenaufbereitung und -übergabe an die SPS der Bau- und/oder Instandhaltungsmaschine 4.

Die aufbereiten Aktions- und Parameterdaten sind Steuerungsdaten, mittels derer die Bau- und/oder Instandhaltungsmaschine 4 einen automatisierten Bewegungsablauf 98 der angesteuerten Arbeitsaggregate 12 durchführt, wobei eine Regulierung 99 der vorgegebenen Parameter erfolgt.

In einer einfachen Ausprägung werden rein geometrische Rahmenbedingungen erfasst und analysiert, um die Adaption der Bau- und/oder Instandhaltungsmaschine 4 und deren Arbeitsaggregate 12 an bauliche Gegebenheiten zu automatisieren. Ein weiterführendes Verfahren sieht vor, dass auch nichtgeometrische Daten in die Steuerungsvorgaben einfließen, z.B. die Dichte des Untergrunds oder dessen Feuchtigkeitsgehalt. Mittels solcher Parameter lässt sich die Beistelldauer eines Stopfaggregats oder die Fahrgeschwindigkeit optimieren.

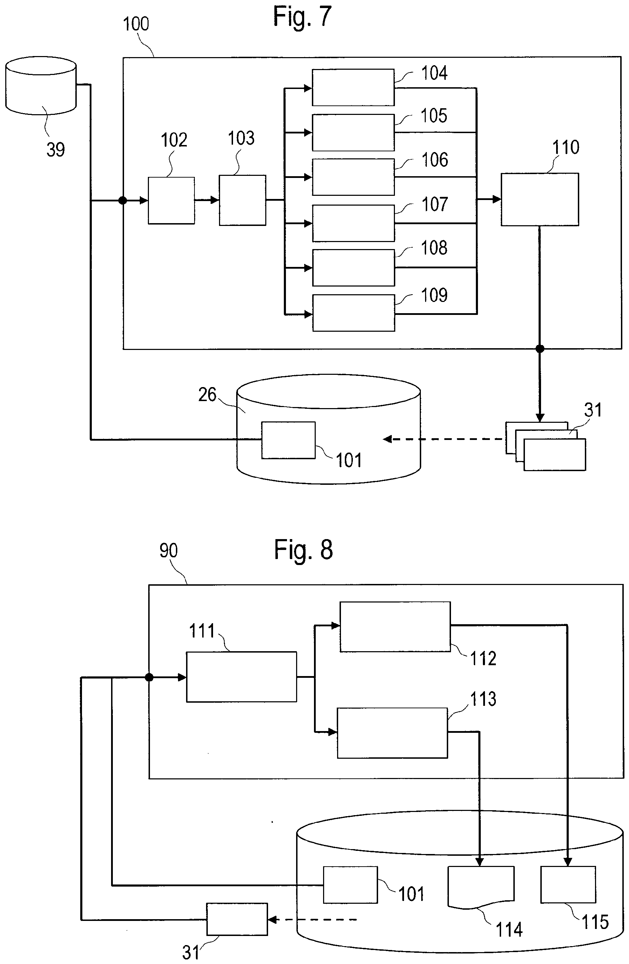

In einer fortgeschrittenen Ausprägung der Erfindung kommt eine vollintegrierte Gleisbausoftware 100 zum Einsatz (Fig. 7). Einzelne Module dieser Software 100 können auf unterschiedlichen Computern des Computersystems 38 implementiert sein. Eingangsdaten bilden in der Datenbank 26 abgespeicherte bzw. von der übergeordneten Datenverwaltungsebene verwaltete relevante Mess- und Analysedaten 101 sowie Daten aus externen Datenquellen 39. Die relevanten Mess- und Analysedaten 101 setzen sich beispielsweise aus ausgewählten Objektdaten 25, 30 und Daten des Modells 79 zusammen.

Die Gleisbausoftware 100 ist zur Durchführung mehrerer Verfahrensschritte vorgesehen. Zuerst erfolgt eine Datenfusion 102 mit einer nachfolgenden Datendarstellung 103. Diese Datendarstellung 103 erfolgt vorteilhafterweise mittels eines Virtual Reality Ausgabegeräts.

In parallel durchführbaren Verfahrensschritten erfolgen beispielsweise eine integrierte Trassierungsplanung 104, eine integrierte Auftragserstellung 105, eine integrierte Bestellung 106 von auszutauschenden Objekten des Fahrweges 3, eine Datenübertragung 107 an eine Verwaltungssoftware (Enterprise-Resource-Planning, ERP), eine integrierte Messvorgangsplanung 108 und eine integrierte Wartungs- und Umbauplanung 109.

Die Ergebnisse dieser Verfahrensschritte werden für eine automatisierte Auftragsgenerierung 110 genutzt, um Arbeitsauftragsdaten 31 für die Bau- und/oder Instandhaltungsmaschine 4 bereitzustellen. Diese Arbeitsauftragsdaten 31 werden über das Datenübertragungssystem 35 direkt an die Bau- und/oder Instandhaltungsmaschine 4 übermittelt und/oder in der Datenbank 26 gespeichert.

Ein Arbeitsablauf der Bau- und/oder Instandhaltungsmaschine 4 mittels Maschinensteuerungssoftware 90 ist in Fig. 8 dargestellt. Eingangsdaten bilden die abgespeicherten relevanten Mess- und Analysedaten 101 sowie jeweilige Arbeitsauftragsdaten 31. Daraus errechnet die Maschinensteuerungssoftware 90 alle erforderlichen Aktionsdaten und Parameterdaten zur Durchführung eines vollautomatischen Steuerungsvorgangs 111 der Bau- und/oder Instandhaltungsmaschine 4.

Daran anschließend erfolgt ein vollautomatischer Nachmessungsvorgang 112 unter Nutzung des Messsystems 2. Parallel dazu läuft in der Steuerungseinrichtung 22 ein Protokollierungsvorgang 113 zur vollständigen Protokollierung aller Aggregatsaktionen.

Als Resultate dieser Vorgänge 111, 112, 113 werden ein Arbeitsprotokoll 114 und aktualisierte Mess- und Analysedaten 115 ausgegeben. Diese werden in der Datenbank 26 abgespeichert und stehen für weitere Instandhaltungsmaßnahmen zur Verfügung.

Somit werden Messaufträge und Instandhaltungsaufträge von vollautomatischen Bau- und/oder Instandhaltungsmaschinen 4 nach Zuteilung durchgeführt und ein Protokoll der Fertigstellung sowie vor und nach einer Bearbeitung erfasste Messdaten zentral abgespeichert. Für Aufträge, die nicht mit automatisierten Maschinen erledigt werden können, erfolgt nach Fertigstellung eine separate automatisierte Messfahrt mit Abspeicherung der Messdaten 40 in der Datenbank 26.

## Patentansprüche

1. Verfahren zur Instandhaltung eines Fahrwegs (3) für Schienenfahrzeuge, wobei zur Feststellung eines Istzustands des Fahrwegs (3) mittels eines auf einem Schienenfahrzeug installierten Messsystems (2) Messdaten (40) erfasst werden und wobei darauf basierend Instandhaltungsmaßnahmen des Fahrwegs durchgeführt werden, wobei für Objekte (5, 6, 7, 8, 9, 10, 11) des Fahrwegs (3) Objektklassen vorgegeben werden, wobei jede Objektklasse durch eine eindeutige Objektklassenkennung definiert ist, wobei mittels einer Auswerteeinrichtung (21) anhand für ein jeweiliges Objekt (5, 6, 7, 8, 9, 10, 11) charakteristischer Messdaten (40) mittels einer Analysesoftware (78) Schotter, Schienen bzw. Schienenabschnitte, Schwellen, Befestigungsmittel, Masten, Fahrdrähte bzw. Fahrdrahtabschnitte und Hindernisse für Arbeitsaggregate (12) einer schienengebundenen Bau- und/oder Instandhaltungsmaschine (4) als Objekte (5, 6, 7, 8, 9, 10, 11) des Fahrwegs (3) erkannt werden, wobei ein erkanntes Objekt (5, 6, 7, 8, 9, 10, 11) der entsprechenden Objektklasse zugeordnet wird, wobei für ein zugeordnetes Objekt (5, 6, 7, 8, 9, 10, 11) die entsprechende Objektklassenkennung verknüpft mit Positionsdaten in einer Datenbank (26) als Objektdaten (25) abgespeichert werden und wobei damit die Instandhaltungsmaßnahmen mittels der schienengebundenen Bau- und/oder Instandhaltungsmaschine (4) durchgeführt werden, indem Steuerungsdaten für einen Arbeitsablauf der schienengebundenen Bau- und/oder Instandhaltungsmaschine (4) aus den in der Datenbank (26) abgespeicherten Daten abgeleitet werden.

2. Verfahren nach Anspruch 1, **dadurch gekennzeichnet, dass** die Ermittlung der Objekte (5, 6, 7, 8, 9, 10, 11) durch einen Abgleich der Messdaten (40) mit vorgegebenen Objektparametern durchgeführt wird.

3. Verfahren nach Anspruch 1 oder 2, **dadurch gekennzeichnet, dass** aus den Messdaten (40) ortsbezogene Synchronisationsdaten abgeleitet werden und dass für das jeweilige Objekt (5, 6, 7, 8, 9, 10, 11) in der Datenbank (26) zugeordnete Synchronisationsdaten abgespeichert werden.

4. Verfahren nach einem der Ansprüche 1 bis 3, **dadurch gekennzeichnet, dass** aus den Messdaten (40) und aus Merkmalsdaten des Messsystems (2) mittels der Analysesoftware (78) zusätzlich ein mehrdimensionales Modell (79) des Fahrwegs (3) errechnet wird.

5. Verfahren nach Anspruch 4, **dadurch gekennzeichnet, dass** das mehrdimensionale Modell (79) mit diversen Merkmalen des Fahrwegs, insbesondere mit Schwellenprägungen, Schienenwalzzeichen (71), Schienenabständen, Abständen zu Nachbargleisen, Fahrdrahtpositionen ergänzt wird.

6. Verfahren nach Anspruch 4 oder 5, **dadurch gekennzeichnet, dass** das mehrdimensionale Modell (79) mit georeferenzierten Informationsdaten einer separaten Datenquelle (39) ergänzt wird.

7. Verfahren nach Anspruch 6, **dadurch gekennzeichnet, dass** ein Sollzustand des Fahrwegs (3) vorgegeben wird, dass Abweichungen des Istzustands vom Sollzustand ausgewertet werden und dass die Steuerungsdaten in Abhängigkeit von den ausgewerteten Abweichungen vorgegeben werden.

8. Verfahren nach Anspruch 6 oder 7, **dadurch gekennzeichnet, dass** nach einem Arbeitsablauf der Bau- und/oder Instandhaltungsmaschine (4) der Istzustand des Fahrweges (3) festgestellt wird.

9. Instandhaltungssystem (1) zur Durchführung eines Verfahrens nach einem der Ansprüche 1 bis 8, mit einem auf einem Schienenfahrzeug installierten Messsystem (2) zur Messdatenerfassung, einer Auswerteeinrichtung (21), einem Datenübertragungssystem (35), einer Datenbank (26) und einer schienengebundenen Bau- und/oder Instandhaltungsmaschine (4), wobei die Auswerteeinrichtung (21) zur Erkennung von Schotter, Schienen bzw. Schienenabschnitten, Schwellen, Befestigungsmitteln, Masten, Fahrdrähten bzw. Fahrdrahtabschnitten und Hindernissen für Arbeitsaggregate (12) der schienengebundenen Bau- und/oder Instandhaltungsmaschine (4) als Objekten (5, 6, 7, 8, 9, 10, 11) des Fahrwegs (3) aus den Messdaten (40) und zur Zuordnung des jeweiligen Objekts (5, 6, 7, 8, 9, 10, 11) zu einer Objektklasse eingerichtet ist, wobei das Datenübertragungssystem (35) zur Übertragung der einem Objekt (5, 6, 7, 8, 9, 10, 11) zugeordneten Objektdaten (25) an die Datenbank (26) eingerichtet ist, und die schienengebundene Bau- und/oder Instandhaltungsmaschine (4) zur Durchführung von Instandhaltungsmaßnahmen auf Basis der Objektdaten (25) ausgebildet ist, indem die Bau- und/oder Instandhaltungsmaschine (4) eingerichtet ist zur Verarbeitung von Steuerungsdaten, die aus in der Datenbank (26) gespeicherten Daten abgeleitet sind.

10. Instandhaltungssystem (1) nach Anspruch 9, **dadurch gekennzeichnet, dass** die Auswerteeinrichtung (21) zur Errechnung eines mehrdimensionalen Modells (79) des Fahrwegs (3) aus den Messdaten (40) und aus Merkmalsdaten des Messsystems (2) eingerichtet ist.

11. Instandhaltungssystem (1) nach Anspruch 10, **dadurch gekennzeichnet, dass** das Instandhaltungssystem (1) ein Ausgabegerät zur perspektivischen Darstellung des mehrdimensionalen Modells (79) umfasst.

12. Instandhaltungssystem (1) nach einem der Ansprüche 9 bis 11, **dadurch gekennzeichnet, dass** das Messsystem (2) einen Laser-Rotationsscanner (13), einen Laser-Linienscanner (14), einen Wirbelstromscanner (15), eine Inertialmesseinheit (16), eine Kamera (20) und einen GNSS-Empfänger (17) umfasst.

## Claims

1. A method for maintenance of a permanent way (3) for rail vehicles, wherein, for determining an actual condition of the permanent way (3), measurement data (40) are recorded by means of a measuring system (2) installed on the rail vehicle, and wherein based on this maintenance measures of the permanent way are executed, wherein for objects (5, 6, 7, 8, 9, 10, 11) of the permanent way (3) object classes are predetermined, wherein each object class is defined by means of an unique object class identification, wherein by means of an evaluation device (21) characteristic measurement data (40) for a particular object (5, 6, 7, 8, 9, 10, 11) by means of analysis software (78) ballast, rails or rail sections , sleepers, fastening means, masts, contact wires or contact wire sections, and obstacles for working units (12) of a rail-bound construction- and/or maintenance machine (4) are detected as objects (5, 6, 7, 8, 9, 10, 11) of the permanent way (3), wherein a detected object (5, 6, 7, 8, 9, 10, 11) is assigned to the relevant object class, wherein for an assigned object (5, 6, 7, 8, 9, 10, 11) the relevant object class identification linked to positional data is stored in a database (26) as object data (25), wherein the maintenance measures are operated by means of the rail-bound construction- and/or maintenance machine (4) by deriving control data for a work sequence of a rail-bound construction- and/or maintenance machine (4) from the data stored in the database (26).

2. A method according to claim 1, **characterized in that** the detection of the objects (5, 6, 7, 8, 9, 10, 11) is carried out by comparing the measurement data (40) with preset object parameters.

3. A method according to claim 1 or 2, **characterized in that** location-related synchronisation data are derived from the measurement data (40), and that associated synchronisation data are stored in the database (26) for the particular object (5, 6, 7, 8, 9, 10, 11).

4. A method according to one of claims 1 to 3, **characterized in that** a multi-dimensional model (79) of the permanent way (3) is computed from the measurement data (40) and from characteristic data of the measuring system (2) by means of the analysis software (78).

5. A method according to claim 4, **characterized in that** the multi-dimensional model (79) is supplemented with various features of the permanent way such as sleeper embossings, rail milling marks (71), rail spacings, distances to adjacent tracks, catenary positions.

6. A method according to claim 4 or 5, **characterized in that** the multi-dimensional model (79) is supplemented with geo-referenced information data of a separate data source (39).

7. A method according to claim 6, **characterized in that** a target condition of the permanent way (3) is specified, that deviations of the actual condition from the target condition are evaluated, and that the control data are prescribed in dependence on the evaluated deviations.

8. A method according to claim 6 or 7, **characterized in that,** after a work sequence of the construction- and/or maintenance machine (4), the actual condition of the permanent way (3) is determined.

9. A maintenance system (1) for executing a method according to one of claims 1 to 8, comprising a measuring system (2) for recording measurement data installed on a rail vehicle, an evaluation device (21), a data transmission system (35), a database (26) and a rail-bound construction- and/or maintenance machine (4), wherein the evaluation device (21) is configured for detecting ballast, rails or rail sections, sleepers, fastening means, masts, contact wires or contact wire sections, and obstacles for working units (12) of the rail-bound construction- and/or maintenance machine (4) as objects (5, 6, 7, 8, 9, 10, 11) of the permanent way (3) from the measurement data (40) and for objects (5, 6, 7, 8, 9, 10, 11) of the permanent way (3) from the measurement data (40) and for the assignment of the the particular object (5, 6, 7, 8, 9, 10, 11) to an object class, wherein the data transmission system (35) is set up for transmitting the object data (25) assigned to an object (5, 6, 7, 8, 9, 10, 11) to the database (26) and that the rail-bound construction- and/or maintenance machine (4) is designed for executing maintenance measures based on the object data (25) wherein the rail-bound construction- and/or maintenance machine (4) is designed for the processing of control data derived from data stored in the database (26).

10. A maintenance system (1) according to claim 9, **characterized in that** the evaluation device (21) is set up for computing a multi-dimensional model (79) of the permanent way (3) from the measurement data (40) and from characteristic data of the measuring system (2).

11. A maintenance system (1) according to claim 10, **characterized in that** the maintenance system (1) includes an output device for perspective representation of the multi-dimensional model (79).

12. A maintenance system (1) according to one of claims 9 to 11, **characterized in that** the measuring system (2) comprises a laser rotation scanner (13), a laser line scanner (14), an eddy current scanner (15), an inertial measuring unit (16), a camera (20) and a GNSS receiver (17).

## Revendications

1. Procédé d'entretien d'une voie de communication (3) pour véhicules ferroviaires, dans lequel des données de mesure (40) sont détectées pour la constatation d'un état réel de la voie de communication (3) au moyen d'un système de mesure (2) installé sur un véhicule ferroviaire et dans lequel des mesures d'entretien de la voie de communication sont réalisées en se basant sur celles-ci, **dans lequel** des catégories d'objet sont prédéfinies pour des objets (5, 6, 7, 8, 9, 10, 11) de la voie de communication (3), dans lequel chaque catégorie d'objet est définie par une signalisation de catégorie d'objet explicite, **dans lequel** du ballast, des rails ou sections de rail, des traverses, des moyens de fixation, des poteaux, des fils de contact ou sections de fil de contact et des obstacles pour modules de travail (12) d'une machine de génie civil et/ou d'entretien guidée (4) sont reconnus en tant qu'objets (5, 6, 7, 8, 9, 10, 11) de la voie de communication (3) au moyen d'un dispositif d'évaluation (21) à l'aide de données de mesure (40) caractéristiques pour un objet respectif (5, 6, 7, 8, 9, 10, 11) au moyen d'un logiciel d'analyse (78), **dans lequel** un objet reconnu (5, 6, 7, 8, 9, 10, 11) est associé à la catégorie d'objet correspondante, **dans lequel** pour un objet associé (5, 6, 7, 8, 9, 10, 11), la signalisation de catégorie d'objet correspondante reliée à des données de position sont mémorisées dans une base de données (26) en tant que données d'objet (25) et **dans lequel** les mesures d'entretien sont réalisées ce faisant au moyen de la machine de génie civil et/ou d'entretien guidée (4) en ce que des données de commande pour un déroulement de travail de la machine de génie civil et/ou d'entretien guidée (4) sont dérivées des données mémorisées dans la base de données (26).

2. Procédé selon la revendication 1, **caractérisé en ce que** la détermination des objets (5, 6, 7, 8, 9, 10, 11) est réalisée par un recoupement des données de mesure (40) avec des paramètres d'objet prédéfinis.

3. Procédé selon la revendication 1 ou 2, **caractérisé en ce que** des données de synchronisation relatives à un endroit sont dérivées des données de mesure (40) et que des données de synchronisation associées sont mémorisées dans la base de données (26) pour l'objet respectif (5, 6, 7, 8, 9, 10, 11).

4. Procédé selon une des revendications 1 à 3, **caractérisé en ce qu'**un modèle pluridimensionnel (79) de la voie de communication (3) est en outre calculé à partir des données de mesure (40) et à partir de données caractéristiques du système de mesure (2) au moyen du logiciel d'analyse (78).

5. Procédé selon la revendication 4, **caractérisé en ce que** le modèle pluridimensionnel (79) est complété avec diverses caractéristiques de la voie de communication, notamment avec des marques de traverse, marques de laminage de rail (71), intervalles de rail, intervalles à des voies voisines, positions de fil de contact.

6. Procédé selon la revendication 4 ou 5, **caractérisé en ce que** le modèle pluridimensionnel (79) est complété avec des données d'information géoréférencées d'une source de données séparée (39).

7. Procédé selon la revendication 6, **caractérisé en ce qu'**un état de consigne de la voie de communication (3) est prédéfini, que des écarts entre l'état réel et l'état de consigne sont évalués, et que les données de commande sont prédéfinies en fonction des écarts évalués.

8. Procédé selon la revendication 6 ou 7, **caractérisé en ce que** l'état réel de la voie de communication (3) est constaté après un déroulement de travail de la machine de génie civil et/ou d'entretien (4).

9. Système d'entretien (1) pour la réalisation d'un procédé selon une des revendications 1 à 8, avec un système de mesure (2) installé sur un véhicule ferroviaire pour la détection de données de mesure, un dispositif d'évaluation (21), un système de transmission de données (35), une base de données (26) et une machine de génie civil et/ou d'entretien guidée (4), dans lequel le dispositif d'évaluation (21) est configuré pour la reconnaissance de ballast, rails ou sections de rail, traverses, moyens de fixation, poteaux, fils de contact ou sections de fil de contact et d'obstacles pour modules de travail (12) de la machine de génie civil et/ou d'entretien guidée (4) en tant qu'objets (5, 6, 7, 8, 9, 10, 11) de la voie de communication (3) à partir des données de mesure (40) et pour l'association de l'objet respectif (5, 6, 7, 8, 9, 10, 11) à une catégorie d'objet, **dans lequel** le système de transmission de données (35) est configuré pour la transmission des données d'objet (25) associées à un objet (5, 6, 7, 8, 9, 10, 11) à la base de données (26), et la machine de génie civil et/ou d'entretien guidée (4) est réalisée pour la réalisation de mesures d'entretien sur la base des données d'objet (25) en ce que la machine de génie civil et/ou d'entretien (4) est configurée pour le traitement de données de commande qui sont dérivées des données mémorisées dans la base de données (26).

10. Système d'entretien (1) selon la revendication 9, **caractérisé en ce que** le dispositif d'évaluation (21) est configuré pour le calcul d'un modèle pluridimensionnel (79) de la voie de communication (3) à partir des données de mesure (40) et à partir de données caractéristiques du système de mesure (2).

11. Système d'entretien (1) selon la revendication 10, **caractérisé en ce que** le système d'entretien (1) comprend un appareil de sortie pour la représentation en perspective du modèle pluridimensionnel (79).

12. Système d'entretien (1) selon une des revendications 9 à 11, **caractérisé en ce que** le système de mesure (2) comprend un scanner laser rotatif (13), un scanner laser linéaire (14), un scanner à courant de Foucault (15), un module de mesure inertielle (16), une caméra (20) et un récepteur GNSS (17).
